# EUROPEAN PATENT SPECIFICATION

(11) **EP 1 732 967 B1**
(45) Date of publication and mention of the grant of the patent: **05.12.2007**
(21) Application number: 05731603.6
(22) Date of filing: 28.03.2005
(51) Int. Cl.: C08G 18/12, C08G 18/48, C08G 18/50

(54) **A URETHANE-MODIFIED ISOCYANATE COMPOSITION AND POLYURETHANE PRODUCT THEREFROM**
URETHANMODIFIZIERTE ISOCYANATZUSAMMENSETZUNG UND POLYURETHANPRODUKT DARAUS
COMPOSITION A BASE D'ISOCYANATE MODIFIEE A L'AIDE D'URETHANE ET PRODUIT A BASE DE POLYURETHANE OBTENU A PARTIR LADITE COMPOSITION

(30) Priority: 31.03.2004 US 557875 P
(43) Date of publication of application: 20.12.2006
(73) Proprietor: Dow Global Technologies Inc., Midland, MI 48674 (US)
(72) Inventor: THIEDE, Verena, M., T., 48151 Muenster (DE)
(74) Representative: Raynor, John
(86) International application number: PCT/US2005/010346
(87) International publication number: WO 2005/097862

(56) References cited:
- WO-A-01/58976
- US-A- 4 296 230
- US-A- 6 032 412

## Description

The present invention relates to a urethane-modified isocyanate composition containing an isocyanate-terminated prepolymer and use of such composition to prepare a polyurethane polymer, notably a hydrophilic polyurethane polymer.

Hydrophilic polyurethane foams can be prepared by a process in which a hydrophilic prepolymer having isocyanate end groups is mixed and reacted with water. U.S. Patent Nos. 3,861,993 and 3,889,417 disclose hydrophilic polyurethane foam which is formed by mixing and reacting water with an isocyanate capped polyoxyethylene glycol prepolymer using a molar ratio of H₂O to NCO groups in the prepolymer of 6.5 to 390:1.

A particular family of polyurethane prepolymers, derived from methylene diphenylisocyanate (MDI) and the aqueous two-stage process foams produced therefrom, are disclosed in U.S. Patent 4,365,025. An isocyanate-containing prepolymer in which the isocyanate is a mixture of MDI and polymeric forms of MDI is foamed by mixing it with an approximately equal amount of water. The resultant flexible foams are characterized by greater hydrolytic stability than those foamed from toluene diisocyanate (TDI) prepolymers. Often other hydrophilic materials, such as fibers (See, for example, U.S. Patent 4,127,516) or super absorbent polymers (See, for example, U.S. Patents 5,064,653 and 6,034,149) or particles (See, for example, U.S. Patent 3,224,889) may be incorporated into the foam structures to improve physical properties including, for example, wet out rates of such foams.

U.S. Patent 4,314,034 discloses a polyurethane foamed sponge formed from the combination of a hydrophilic oxyalkylene polyol capped with isocyanate groups and 1 to 30 percent by weight of a polymeric polyisocyanate, such as a polymeric MDI. The prepolymers are foamed in the presence of water, reinforcing fibers, surfactants, and a thickening agent and up to 30 percent by weight of diatomaceous earth. With the diatomaceous earth and PAPI polymeric MDI the foam sponge has what is described as rapid wet out and improved wet strength.

U.S. Patent 5,650,450 discloses hydrophilic foam prepared by reaction of a MDI/polymeric MDI-based isocyanate capped prepolymer with an aqueous component comprising a selected silicone glycol copolymer liquid surfactant.

Despite an extensive knowledge concerning the preparation of hydrophilic polyurethane products based on MDI-based prepolymers, TDI based prepolymers are still extensively used in the industry. MDI-based prepolymers compared to the TDI prepolymers, despite the observation that they frequently confer more desirable physical properties in the final polyurethane product, generally display inferior processing and reactivity characteristics. Consequently there remains a need to provide alternative urethane-modified isocyanate composition and desirably a MDI-based prepolymer which has an enhanced reactivity profile.

Within the general field of urethane-modified isocyanate compositions and their conversion to polyurethane products, there is also a need to enhance and provide for control of system reactivity while at the same time permitting the use of substantially lowers amounts of polyurethane catalyst or even absence of catalyst Reduced amounts, or absence of such polyurethane catalyst, when reacting such isocyanate compositions is a distinct advantage as such catalysts are frequently irritants or have environmental, health or safety constraints and can not be present in polyurethane articles intended for certain applications or end.

To this purpose, the use of isocyanate compositions comprising a prepolymer derived from an auto-catalytic polyol has been investigated. Auto-catalytic polyether polyols are oligomer substances which possess an inherent ability to catalyze the formation of polyurethane through the reaction of a polyol with an isocyanate. Polyols associated with such ability are typically nitrogen-containing polyols, for example, such as reported in the patent publication WO 01/58976.

It has now been discovered that polyisocyanates modified through reaction with certain nitrogen-containing polyether polyols provide isocyanate compositions that are eminently suitable for preparing hydrophilic polyurethane polymers.

In one aspect, this invention relates to a urethane-modified isocyanate composition having an average isocyanate content of less than about 15 weight percent and which comprises the reaction product of:
a) a stoichiometric excess of an aliphatic or aromatic polyisocyanate, or mixtures thereof; with
b) a polyol composition that comprises 1 to 20 percent by weight of at least one nitrogen-containing polyether polyol having a molecular weight of from 1000 to 12000 obtained by alkoxylation of at least one initiator molecule of the formula
HₘA-(CH₂)ₙ-N(R)-(CH₂)ₚ-AHₘ Formula (I)

wherein n and p are independently integers from 2 to 6,
A at each occurrence is independently oxygen, sulfur, nitrogen or hydrogen, with the proviso that only one of A can be hydrogen at one time,
R is a C₁ to C₃ alkyl group,
m is equal to 0 when A is hydrogen, is 1 when A is oxygen or sulfur and is 2 when A is nitrogen; or

   H₂N-(CH₂)ₘ-N(R)H Formula (II)
where m is an integer from 2 to 12 and
R is a C₁ to C₃ alkyl group,
and the polyol composition contains an oxyethylene content of at least 25 percent by weight.

In a second aspect this invention relates to a hydrophilic polyurethane polymer prepared by bringing together water and an isocyanate composition as mentioned above.

In a third aspect, this invention is a process for making a hydrophilic polyurethane foam comprising mixing together an aqueous phase with an isocyanate composition as mentioned above.

In a fourth aspect, this invention is a process for making a hydrophilic polyurethane gel comprising mixing together an aqueous phase with an isocyanate composition as mentioned above.

In a fifth aspect, this invention is a horticultural growing medium comprising an urethane-modified isocyanate composition as mentioned above and at least one filler material obtained by mixing the filler with the isocyanate composition and applying water to the resulting blend to form a growing medium.

In a sixth aspect, this invention is a process for making hydrophilic sealants by mixing together an aqueous phase and an isocyanate composition in building and construction applications.

The urethane-modified isocyanate composition of this invention typically has an average, or free, isocyanate content of less than about 15 weight percent, preferably less than 12 percent and more preferably less than 10 weight percent.

In a preferred embodiment, when producing a foam, the isocyanate content of the composition is at least 1, more preferably at least 2, and yet more preferably at least 4 weight percent. Most preferred is an isocyanate content of 4 to 10 percent for producing a foam. When intending to prepare a polyurethane gel, advantageously the isocyanate content of the composition is from 2 to 8 weight percent. More preferably the isocyanate content is from 2 to 4 percent by weight.

The isocyanate composition is characterized in that it comprises the reaction product of a stoichiometric excess of a polyisocyanate with a polyol composition that contains at least one auto-catalytic polyol initiated from a molecule containing a tertiary nitrogen and the polyol has an average molecular weight (Daltons) of from 1000 to 12000, preferably from 1000 to 10000, and yet more preferably from 2000 to 8000. To facilitate in controlling the reactivity profile of the resulting isocyanate composition it is found advantageous to limit the amount of such initiated polyol present in the polyol composition. To this purpose, the polyol composition advantageously comprises the auto-catalytic polyol in an amount of from 0.5 to 50, preferably from 1 to 30, and more preferably from 1 to 25 weight percent, based on total weight of the polyol composition including the auto-catalytic polyol.

The balance of the polyol composition contains from 99.5 to 50, preferably from 99 to 30, and more preferably from 99 to 75 weight percent based on total weight of all polyol in the composition, of one or more additional polyols. Such additional polyols are compounds which contain two or more isocyanate reactive groups, generally active-hydrogen groups, such as -OH, primary or secondary amines, and -SH. Representative of suitable polyols are generally known and are described in such publications as High Polymers, Vol. XVI; "Polyurethanes, Chemistry and Technology", by Saunders and Frisch, Interscience Publishers, New York, Vol. I, pp. 32-42, 44-54 (1962) and Vol II. Pp. 5-6, 198-199 (1964); Organic Polymer Chemistry by K. J. Saunders, Chapman and Hall, London, pp. 323-325 (1973); and Developments in Polyurethanes, Vol. I, J.M. Burst, ed., Applied Science Publishers, pp. 1-76 (1978). Representative of suitable polyols include polyester, polylactone, polyether, polyolefin, polycarbonate polyols, and various other polyols.

Illustrative of the polyester polyols are the poly(alkylene alkanedioate) glycols that are prepared via a conventional esterification process using a molar excess of an aliphatic glycol with relation to an alkanedioic acid. Illustrative of the glycols that can be employed to prepare the polyesters are ethylene glycol, diethylene glycol, propylene glycol, dipropylene glycol, 1,3-propanediol, 1,4-butanediol and other butanediols, 1,5-pentanediol and other pentane diols, hexanediols, decanediols, dodecanediols and the like. Preferably the aliphatic glycol contains from 2 to 8 carbon atoms. Illustrative of the dioic acids that may be used to prepare the polyesters are maleic acid, malonic acid, succinic acid, glutaric acid, adipic acid, 2-methyl-1,6-hexanoic acid, pimelic acid, suberic acid, dodecanedioic acids, and the like. Preferably the alkanedioic acids contain from 4 to 12 carbon atoms. Illustrative of the polyester polyols are poly(hexanediol adipate), poly(butylene glycol adipate), poly(ethylene glycol adipate), poly(diethylene glycol adipate), poly(hexanediol oxalate), poly(ethylene glycol sebecate), and the like.

Polylactone polyols useful in the practice of this invention are the di-, tri- or tetra-hydroxyl in nature. Such polyol are prepared by the reaction of a lactone monomer; illustrative of which is δ-valerolactone, ε-caprolactone, ε-methyl-ε-caprolactone, ξ-enantholactone, and the like; is reacted with an initiator that has active hydrogen-containing groups; illustrative of which is ethylene glycol, diethylene glycol, propanediols, 1,4-butanediol, 1,6-hexanediol, trimethylolpropane, and the like. The production of such polyols is known in the art, see, for example, United States Patent Nos. 3,169,945, 3,248,417, 3,021,309 to 3,021,317. The preferred lactone polyols are the di-, tri-, and tetra-hydroxyl functional ε-caprolactone polyols known as polycaprolactone polyols.

The polyether polyols include those obtained by the alkoxylation of suitable starting molecules with an alkylene oxide, such as ethylene, propylene, butylene oxide, or a mixture thereof. Examples of initiator molecules include water, ammonia, aniline or polyhydric alcohols such as dihyric alcohols having a molecular weight of 62-399, especially the alkane polyols such as ethylene glycol, propylene glycol, hexamethylene diol, glycerol, trimethylol propane or trimethylol ethane, or the low molecular weight alcohols containing ether groups such as diethylene glycol, triethylene glycol, dipropylene glyol or tripropylene glycol. Other commonly used initiators include pentaerythritol, xylitol, arabitol, sorbitol mannitol and the like.

In some applications it may be desirable to include copolymer polyols such as those containing styrene acrylonitrile (SAN), polyharnstuff (PHD) or polyisocyanate poly addition (PIPA) polymers. Preferred polyols used with the catalytic polyol are polyether polyols.

The additional polyol has an average nominal hydroxyl functionality of from 1.6 to 8, preferably from 1.6 to 4; a molecular weight of from 1000 to 12000; preferably from 1000 to 10,000, and more preferably from 1000 to 8500.

By the term "nominal", it is meant the average hydroxyl functionality of the composition with the assumption that the average functionality of the polyol is identical to that average functionality (active hydrogen atoms per molecule) of the initiator or initiator mixture as used in the preparation of the polyol.

For producing a hydrophilic foam from the urethane-modified isocyanate composition, the polyol composition generally has an overall oxyethylene (EO) group content of at least 30 percent by weight. Preferably the polyol compositions contains at least 40 percent, more preferably at least 50 percent, and yet most preferably at least 65 percent by weight of EO groups. The EO content can be as high as 99.5 percent by weight of the polyol composition.

Preferably the EO content is less than 95 percent by weight of the polyol composition. More preferably the EO content is less than 90 percent by weight of the polyol composition. The EO content may be supplied by the auto-catalytic polyol, the additional polyol, or may be distributed between the auto-catalytic polyol and the additional polyol. The balance of the polyol, other than the initiator and EO, is generally propylene oxide (PO) or butylenes oxide (BO).

The catalytic polyether polyol or polyols used in the present invention are obtained by alkoxylation of at least one initiator molecule of the formula

HₘA-(CH₂)ₙ-N(R)-(CH₂)ₚ-AHₘ Formula (I)

wherein n and p are independently integers from 2 to 6,
A at each occurrence is independently oxygen, nitrogen, sulfur or hydrogen, with the proviso that only one of A can be hydrogen at one time,
R is a C₁ to C₃ alkyl group,
m is equal to 0 when A is hydrogen, is 1 when A is oxygen or sulfur and is 2 when A is nitrogen or

   H₂N-(CH₂)ₘ- N(R)H Formula (II)
where m is an integer from 2 to 12 and
R is a C₁ to C₃ alkyl group.

In a preferred embodiment of Formula I, R is methyl. In another preferred embodiment R is methyl and n and p are integers of the same value. In a more preferred embodiment n and p are an integer of 2 to 4. Preferably when A is not hydrogen, A at each occurrence will be either oxygen or nitrogen. In a more preferred embodiment one A will be oxygen and the other A will be nitrogen, and the final polyol will be a triol. In a yet more preferred embodiment, A is nitrogen in all occurrences and the final polyol will be a tetrol.

The alkyl amines of Formula I are commercially available or can be made by techniques known in the art, such as U.S. Patent 4,605,772, the disclosure of which is incorporated herein by reference. For example, methylamine is reacted with the appropriate alkylene oxide for producing compounds where A is oxygen. Preferably the alkylene oxide is ethylene oxide, propylene oxide, or butylene oxides, which gives a preferred range of 2 to 4 for n when each A is oxygen. Preferred compounds are N-methyldiethanolamine, N-methyldipropanolamine, N-methyldibutanol-amine, N-methylethanol-propananol-amine

For producing compounds where each A is nitrogen, methyl amine can be reacted with any known reactive group that reacts with an amine and contains additional nitrogen. For example, 2 moles of X(CH₂)ₙNR'R" can be reacted with one mole of methylamine where X represents chlorine, bromine or iodine, and R' and R" can be H or an alkyl group. Preferred compounds include 3,3'-diamino-N-methyldipropylamine, 2,2'-diamino-N-methyldiethylamine, 2,3-diamino-N-methyl-ethyl-propylamine.

For producing compounds where one A is nitrogen and one A is oxygen, one can use a process such as the one described in JP 09,012,516, the disclosure of which is incorporated herein by reference.

Examples of commercially available compounds of Formula I particularly preferred as polyol initiator in this invention include N-methyldiethanolamine, N-(2-hydroxyethyl)-N-methyl-1,3-propanediamine, and especially 3,3'-diamino-N-methyldipropylamine.

In one embodiment of Formula II, R is methyl. Preferable m in Formula II is an integer of 2 to 1, more preferably 2 to 6 and most preferred from 2 to 4. In a preferred embodiment, R is methyl and m is an integer of 2 to 4.

Compounds of Formula II can be made by standard procedures known in the art. Examples of commercially available compounds of Formula II include N-methyl-1,2-ethanediamine and N-methyl-1,3-propanediamine.

The production of polyols by alkylation of an initiator can be done by procedures well known in the art. In general, a polyol is made by the addition of an alkylene oxide (EO, PO, or BO), or a combination of alkylene oxides to the initiator by anionic or cationic reaction or use of double metal cyanide (DMC) catalyst. In the case of alkaline catalysts, these alkaline catalysts are preferably eliminated from the polyol at the end of production by a proper finishing step, such as coalescence using magnesium silicate, separation, acid neutralization or neutralized by ion exchanging. For some applications only one alkylene oxide monomer is used, for other applications a blend of monomers is used and in some cases a sequential addition of monomers is preferred, such as PO followed by an EO feed, EO followed by PO.

In the present invention the polyisocyanate reacted in excess with the above described polyol composition comprises an aliphatic polyisocyanate or an aromatic polyisocyanate, or mixtures thereof. Suitable aliphatic polyisocyanates include hexamethylene diisocyanate and isophorone diisocyanate. Preferred are aromatic polyisocyanates including toluene diisocyanate, methylene diphenylisocyanate, including isomers thereof, and polymethylene polyphenylisocyanate (crude MDI).

In a preferred embodiment the aromatic polyisocyanate is an isocyanate mixture that contains methylene diphenylisocyanate (MDI) isomers in at least about 60 weight percent of total isocyanate present. This includes MDI compositions containing predominately the 4,4'-isomer, that is, greater than 50 percent, preferably greater than 90 weight percent 4,4'-isomer. Preferably the MDI comprises the 2,4'- and 4,4'-methylene diphenylisocyanate isomers in a molar ratio of from 25:75 to 80:20, preferably from 40:60 to 80:20, more preferably in from 45:55 to 70:30. The balance of the isocyanate mixture when not methylene diphenylisocyanate can comprise toluene diisocyanate, hexamethylene diisocyanate, isophorone diisocyanate, polymethylene polyphenylisocyanate, carbodiimide or allophonate or uretonimine adducts of methylene diphenylisocyanate and mixtures thereof. Preferred isocyanates to make up the balance of the composition are polymethylene polyphenylisocyanate, carbodiimide or allophonate or uretonimine adducts of methylene diphenylisocyanate. In a particularly preferred embodiment, the isocyanate mixture consists essentially of 2,4'- and 4,4'-methylene diphenylisocyanate isomers in a molar ratio of from 25:75 to 80:20, preferably from 40:60 to 80:20; more preferably from 45:55 to 70:30. The combination of a low NCO content and increased 2,4'-MDI isomer in the prepolymer, when reacted with water, unexpectedly give a foam/gel having high hydrophilicity and good physical mechanical properties in terms of flexibility and properties like tear resistance.

The isocyanate composition containing the prepolymer is prepared in a conventional way by combining the diisocyanate and the polyol at 20-100°C and if desired, in the presence of urethane-forming catalyst, such as a tertiary amine or tin compound. The relative amounts of the diisocyanate and the polyol are chosen in such a way as to arrive at the desired free NCO content of the final product. In general the equivalent amount of diisocyanate will be higher than the equivalent amount of the polyol (isocyanate moieties to isocyanate reactive moieties of the polyol). The preparation of the prepolymer is a routine operation for those skilled in the art. When a large excess of polyisocyanate is used, excess unreacted polyisocyanate can be removed, for example by distillation.

As noted earlier, another aspect of this invention is the use of the described isocyanate composition to manufacture a polyurethane polymer, and notably a hydrophilic polymer through reaction with an aqueous composition. When making a hydrophilic polyurethane polymer, the ratio of the amount of isocyanate composition to the aqueous mixture can vary over a wide range depending on the target density of the resulting polymer and its associated physical parameters; and also on the isocyanate content of the composition.

When intending to prepare a hydrophilic foam, typically 100 parts by weight of the isocyanate composition will be mixed and reacted with from 10 to 1000 parts by weight of an aqueous phase, preferably 50 to 500, and more preferably with from 50 to 250 parts by weight of the aqueous phase.

Conversely, when intending to prepare a hydrophilic gel, 100 parts by weight of the isocyanate composition will be mixed and reacted with from 5000 to 300 and preferably from 3500 to 300 parts by weight of an aqueous phase. Polymers having utility as a binder may also be prepared in a similar manner as described herein; generally the relative amounts of isocyanate composition to aqueous phase will be between the ranges noted for the foam and gel applications. A preferred method of foaming the isocyanate composition comprising prepolymer is to bring the aqueous phase, for example, a 2 percent solution of the surfactant to a temperature of from 5°C to 50°C and introduce to this the isocyanate composition. The resulting mixture is then brought to the mold, dispensed and allowed to react out or handled in a continuous process.

When intended to use the urethane-modified isocyanate composition in the manufacture of a hydrophilic polyurethane foam, either by a discontinuous or continuous process, it is found advantageous to incorporate a crosslinking agent within the prepolymer in contrast to having it present in the hydroxyl composition to be reacted with the isocyanate/prepolymer composition. Introduction of the cross-linking agent in this manner facilitates preparation of foam with attractive mechanical properties. Representative of crosslinkers suitable for incorporation into the prepolymer are low molecular weight polyols typically having an average hydroxyl functionality of from 3 to 4, or low molecular weight amines having typically 3 or 4 amine moieties. Illustrative and preferred are glycerine, trimethylolpropane and low molecular weight alkoxylated derivatives thereof. Ethylenediamine is also commonly used although it is a less preferred amine cross-linking agent for use with the present invention. Such cross-linking agent may be present in an amount of from 0.1 to 5, preferably from 0.5 to 3 and more preferably from 1 to 3 percent of the total amount by weight of polyether polyol, cross-linking agent and optional viscosity modifier to be reacted with the isocyanate.

Hydrophilic polyurethane foam is prepared by contacting under the reaction conditions the isocyanate composition with an aqueous phase. The aqueous phase comprises essentially water and, as might be required, minor amounts of surfactant, catalyst, or a thickening agent. While it is possible to prepare hydrophilic foam in the absence of surfactant it is advantageous to have present a surfactant. Surfactants are chosen to give a foam with a good appearance of cell structure and size and to minimize collapse and or foam deformations, such as for example splitting. Suitable surfactants are block copolymers of oxyethylene and oxypropylene such as, for example the Pluronic surfactants manufactured by BASF include the designated products, Pluronic L-62; L-72; L-92; P-75 or P-85. Other surfactants equivalent in nature or performance may be used in place of the mentioned substances. Surfactants typically will be present in the aqueous phase in an amount of from 0.5 to 4, preferably from 0.75 to 3.0, parts by weight per 100 parts by weight of the total aqueous phase including surfactant. Depending on the application and additives, it may be advantageous to have an amount of surfactant greater than 4 per cent. For example, in certain application substances generally regarded as surfactants may be added in greater amounts when there is a desire to achieve other purposes, such as solubilizing an oil or other components in the formulation or added to give a fine cell structure. In such cases, the surfactant may be present at up to 15 percent by weight of the formulation and preferably up to 10 percent of the formulation.

Hydrophilic foams frequently can be prepared in the absence of a catalyst due to the auto-catalytic properties conferred by the nitrogen-containing polyol and as introduced via the isocyanate composition. If required, a catalyst may be incorporated into the isocyanate composition/aqueous mixture by premixing with the aqueous mixture; or alternatively, with the isocyanate composition. When the catalyst is added to the aqueous mixture, it is preferably added immediately before its use in reaction with the aqueous mixture.

When required, the catalyst is added in an amount to modify the curing time of the reaction product and facilitate in attaining the desired physical attributes of the foam. Suitable common catalysts are substances generally known in the art for promoting the reaction of isocyanate with a polyol and include basic substances such as sodium bicarbonate or the tertiary amines and organometallic compounds. Illustrative of suitable catalysts include n-methyl morpholine, n-ethyl morpholine, trimethylamine, triethylamine, tetramethyl butane diamine, triethylenediamaine, dimethylaminoethanolamine, benzylidimethylamine, dibutyl tin dilaurate and stannous octoate.

For applications where it is desired to reduce the amount of conventional catalysts (amine catalysts) used in producing hydrophilic foams, generally for a base level of catalyst having a specified gel or curing time, the catalytic polyol is added in an amount so that the curing or gel time is equivalent where the reaction mix contains at least 10 percent by weight less conventional catalyst. Preferably the reaction mixture contains 20 percent less and more preferably 30 percent less catalyst as compared to the base amount. In the most preferred embodiment, the formulation contains no additional catalyst. Conversely, if the desire is to decrease the cure or gel time over a base formula containing conventional catalyst, the catalytic polyol can be added to reduce the cure or gel time versus the use of just a conventional catalyst package.

Thickening agents may be present when it is desired to control the viscosity of the aqueous phase and facilitate the transportation and distribution of, for example, fillers or fibers. Exemplary of typical fillers includes clays, diatomaceous earth, calcium carbonate, and mineral fibers such as wallastonite; aqueous latexes such as for example a styrenebutadiene. Examples of thickening agents are natural products such as xanthan gums, or chemical agents such as polyacrylamide polymers, super absorbent powders, and gels as sold by The Dow Chemical Company. Other additives which may also be present include mixing aids and notably emulsifiers.

The aqueous phase may also be used to introduce to other substances, such as fatty oils and functional additives, besides fibers and fillers when desiring to modify physical properties of the resulting polymer. Also present can be fragrances or perfumes or other such substances that can be detected by scent should this be required for the end application. If the end application requires a polymer that has some physiological active properties, the aqueous phase can also be used to introduce active molecules such as for example, pesticides, insecticides, herbicides, attractants, pheromones, growth promoting or regulating substances or plant or animal nutrients. Additives as associated with soaps or other personal hygiene applications as known to those skilled in the art may be added. If the resulting polymer is to be used in end applications where electrical or luminescent properties are required, the aqueous mixture may be used to introduce electrolytes so as to render the polymer electro-conductive, or fluorescent or phosphorescent additives so as to render the polymer luminescent. While generally such additional substances are introduced via the aqueous phase, the isocyanate composition can also be utilized in the same manner when no adverse reactions or process conditions prevail.

Additives, such as those disclosed above, for the production of gels based on the prepolymers of the present invention can be used in the production of a gel.

Foams produced by the prepolymers of the present invention are useful for safety applications, such as ear plugs; cosmetics, such as facial sponges; wound dressing, such as bandages; clothing, such as shoulder pads, etc. Gels produced by the prepolymers of the present invention are particularly useful in support applications, such as furniture; use in air fresheners and in biosensors, that is matrix for enzyme immobilization.

Other application areas where the isocyanate compositions of the present invention find utility is in the preparation of potting ground and growth medium for young plants and seedlings. The patent publications, U.S. Patents 6,322,734 and 6,479,433 incorporated herein by reference, disclose methods of preparing and binding potting ground using urethane-modified isocyanate compositions. In general, such horticulture or growth medium include peat moss, soil perlite, vermiculite, pumice, baked clay, wood pulp, pine bark, coconut husk ( coir/cocospeat), ground tree bark and mixtures thereof.

The following examples are given to illustrate the invention and should not be interpreted as limiting it in any way. Unless stated otherwise, all parts and percentages are by weight.

A description of the raw materials used in the examples is as follows.

| | |
|---|---|
| Polyisocyanate A: | A 50:50 weight blend of 2,4'- and 4,4'-MDI available from The Dow Chemical Company as ISONATE OP 50. |
| Polyol A: | PolyG 22-56, available from Arch Chemical and understood to be a diol with a molecular weight of about 2000 and an EO content of about 75 percent. |
| Polyol B: | PolyQ 40-56, available from Arch Chemical and understood to be an oxypropylene adduct of ethylenediamine having a molecular weight of about 4000. |
| Polyol C: | a proprietary polyol from The Dow Chemical Company having a hydroxyl equivalent weight of about 1700 and being obtained by reacting 3,3'-diamino-N-methyldipropylamine with an EO/PO mix feed in the weight ratio of about 12:88. |
| Polyol D | is an EO/PO glycerine initiated polyether polyol having an equivalent weight of about 2200 and a randomly distributed EO content of about 68 wt percent. , |

### Examples 1-3

A series of urethane-modified isocyanate compositions are prepared by reacting methylene diphenylisocyanate with one or more polyol ether polyols as indicated below in Table I. Examples A to C are comparative; Examples 1 -3 are present in support of the invention. Also reported are the physicals properties of the resulting compositions and the reactivity and processing traits when the resulting compositions are converted to a polyurethane polymer. Examples 1 to 3 demonstrate an enhancement of reactivity of the isocyanate composition through use of an increasing amount of autocatalytic polyol in the composition. With reference to Comparative Compositions B and C, it is clearly seen that the compositions of this invention provide for a different reactivity and processing as a consequence of having the different nitrogen-containing polyol present.

| (parts by weight) | A | B | C | 1 | 2 | 3 |
|---|---|---|---|---|---|---|
| Polyisocyanate A | 29.35 | 29.44 | 29.46 | 29.26 | 29.12 | 28.97 |
| Benzoylchloride | 0.02 | 0.02 | 0.02 | 0.02 | 0.02 | 0.02 |
| Polyol A | 70.63 | 67.01 | 63.47 | 67.18 | 63.77 | 60.36 |
| Polyol B | / | 3.53 | 7.05 | / | / | / |
| Polyol C | / | / | / | 3.54 | 7.09 | 10.65 |
| | | | | | | |

| Properties: | | | | | | |
|---|---|---|---|---|---|---|
| NCO percent | 7.1 | 6.8 | 6.7 | 6.7 | 6.6 | 6.7 |
| Acidity (ppm) | 62 | 78 | 80 | 63 | 73 | 59 |
| Viscosity (mPas) | 5900 | 6550 | 7550 | 5950 | 7500 | 8500 |
| | | | | | | |

| Reactivity Test 1 | | | | | | |
|---|---|---|---|---|---|---|
| Rise time | 300 | 300 | 285 | 210 | 180 | 150 |
| Tack Free (seconds) | 500 | 420 | 375 | 270 | 255 | 210 |
| Demould time (seconds) | 780 | 630 | 540 | 390 | 360 | 330 |

### Example 4

An urethane modified isocyanate composition having an isocyanate content of about 3 wt percent is prepared by contacting 10.43 parts of toluene diisocyanate (2,4"-TDI; 2,6'-TDI in an 80:20 ratio) in the presence of 0.02 parts benzoyl chloride with a polyol - composition that comprises 4.5 parts of Polyol C and 85.1 parts of a Polyol D.

## Claims

1. A urethane-modified isocyanate composition having an isocyanate content of less than about 15 weight percent and which comprises the reaction product of:
a) a stoichiometric excess of an aliphatic or aromatic polyisocyanate, or mixtures thereof; with
b) a polyol composition that comprises (i) 0.5 to 50 percent by weight or more of at least one nitrogen-containing polyether polyol having a molecular weight of from 1000 to 12000 obtained by alkoxylation of at least one initiator molecule of the formula
HₘA-(CH₂)ₙ-N(R)-(CH₂)ₚ-AHₘ Formula (I)
wherein n and p are independently integers from 2 to 6,
A at each occurrence is independently oxygen, nitrogen, sulfur or hydrogen, with the proviso that only one of A can be hydrogen at one time,
R is a C₁ to C₃ alkyl group,
m is equal to 0 when A is hydrogen, is 1 when A is oxygen or sulfur, and is 2 when A is nitrogen, or
H₂N-(CH₂)ₘ-N(R)H Formula (II)
where m is an integer from 2 to 12 and
R is a C₁ to C₃ alkyl group,
and (ii) the remainder of the polyol composition is an additional polyol having a nominal hydroxyl functionality of 1.6 to 8 and a molecular weight of 1000 to 12,000,
and the polyol composition contains an oxyethylene content of greater than 25 percent by weight.

2. The isocyanate composition of Claim 1 having an isocyanate content of from 2 to 12 weight percent.

3. The isocyanate composition of Claim 1 wherein the polyisocyanate is an aromatic polyisocyanate.

4. The isocyanate composition of Claim 3 wherein the aromatic polyisocyanate comprises a toluene diisocyanate or a methylene diphenylisocyanate.

5. The isocyanate composition of Claim 4 wherein the aromatic polyisocyanate comprises 2,4'- and 4,4'- methylene diphenylisocyanate in a molar ratio of from 25:75 to 80:20.

6. The isocyanate composition of Claim 5 wherein the polyol b(i) is derived from an initiator of Formula I.

7. The isocyanate composition of Claim 6 wherein A at each occurrence in Formula I is nitrogen.

8. The isocyanate composition of Clam 7 wherein the compound represented by Formula I is 3,3'-diamino-N-methyldipropylamine, 3,3'-diamino-N-ethyldipropylamine, 2,2'-diamino-N-methyldiethylamine.

9. The isocyanate composition of Claim 6 wherein A at each occurrence in Formula I is oxygen.

10. The isocyanate composition of Claim 6 wherein one A in formula I is oxygen and the other A is nitrogen.

11. The isocyanate composition of Claim 10 wherein the compound represented by Formula I is N-(2-hydroxyethyl)-N-methyl-1,3-propanediamine, or N-(2-hydroxyethyl)-N-methyl-1,2- ethanediamine.

12. The isocyanate composition of Claim 1 wherein the compound represented by Formula I is 3,3'-diamino-N-methyldipropylamine or N-methyldipropanolamine.

13. The isocyanate composition of Claim 1 wherein the polyol b(i) is derived from an initiator of Formula II.

14. The isocyanate composition of Claim 13 wherein the nitrogen-containing polyether polyol constitutes from 1 to 25 weight percent of the polyol composition.

15. An urethane-modified isocyanate composition having an isocyanate content of from 2 to 12 weight percent and which comprises the reaction product of:
a) a stoichiometric excess of an aromatic polyisocyanate comprising 2,4'- and 4,4'-methylene diphenylisocyanate in a molar ratio of from 25:75 to 80:20; with
b) a polyol composition which comprises: (i) from 1 to 50 weight percent, based on weight of the total polyol composition, of a polyether polyol having a molecular weight of from 1000 to 12000 obtained by alkoxylation of 3,3'-diamino-N-methyldipropylamine or N-methyldipropanolamine; and (ii) from 99 to 50 weight percent of one or more polyether polyols that has an average nominal hydroxyl functionality of from 1.6 to 8; a molecular weight of from 1000 to 12000; and the polyol composition has at least 30 percent by weight of oxyethylene groups.

16. An urethane-modified isocyanate composition having an isocyanate content of from 2 to 12 weight percent and which comprises the reaction product of:
(a) a stoichiometric excess of an aromatic polyisocyanate comprising toluene diisocyanate; and
(b) a polyol composition which comprises: (i) from 1 to 50 weight percent, based on weight of the total polyol composition, of a polyether polyol having a molecular weight of from 1000 to 12000 and obtained by alkoxylation of 3,3'-diamino-N-methyldipropylamine or N-methyldipropanolamine; and (ii) from 99 to 50 weight percent of one or more polyether polyols that has an average nominal hydroxyl functionality of from 1.6 to 8; a molecular weight of from 1000 to 12000; and the polyol composition has at least 30 percent by weight of oxyethylene groups.

17. A hydrophilic polyurethane polymer prepared by bringing together water and an isocyanate composition as claimed in Claim 1.

18. A process for making a hydrophilic polyurethane foam comprising mixing together an aqueous phase with an isocyanate composition as claimed in Claim 1.

19. A process for making a hydrophilic polyurethane gel comprising mixing together an aqueous phase with an isocyanate composition as claimed in Claim 1.

20. A horticultural growing medium comprising an urethane-modified isocyanate composition as claimed in Claim 1 and at least one filler material obtained by mixing the filler with the isocyanate composition and applying water to the resulting blend to form a growing medium.

21. The use of the composition of Claim 1 as a sealant for the building and construction industry.

## Patentansprüche

1. Urethan-modifizierte Isocyanatzusammensetzung mit einem Isocyanatgehalt von weniger als etwa 15 Gewichtsprozent und welche umfasst das Reaktionsprodukt von:
a) einem stöchiometrischen Überschuss eines aliphatischen oder aromatischen Polyisocyanats, oder Gemischen davon, mit
b) einer Polyolzusammensetzung welche umfasst (i) 0,5 bis 50 Gewichtsprozent oder mehr von wenigstens einem stickstoffhaltigen Polyetherpolyol mit einem Molekulargewicht von 1000 bis 12000, erhalten durch Alkoxylierung von wenigstens einem Initiatormolekül der Formel
HₘA-(CH₂)ₙ-N(R)-(CH₂)ₚ-AHₘ Formel (I)
wobei n und p unabhängig ganze Zahlen von 2 bis 6 sind,
A bei jedem Auftreten unabhängig Sauerstoff, Stickstoff, Schwefel oder Wasserstoff ist, mit der Maßgabe, dass nicht beide A gleichzeitig Wasserstoff sein können,
R eine C₁- bis C₃-Alkylgruppe ist,
m gleich 0 ist, wenn A Wasserstoff ist, gleich 1 ist, wenn A Sauerstoff oder Schwefel ist, und 2 ist, wenn A Stickstoff ist, oder der
H₂N-(CH₂)ₘ-N(R)H Formel (II)
wobei m eine ganze Zahl von 2 bis 12 ist und
R eine C₁- bis C₃-Alkylgruppe ist,
und (ii) der Rest der Polyolzusammensetzung ein zusätzliches Polyol ist, mit einer nominalen Hydroxylfunktionalität von 1,6 bis 8 und einem Molekulargewicht von 1000 bis 12000,
und die Polyolzusammensetzung einen Oxyethylengehalt von mehr als 25 Gewichtsprozent enthält.

2. Isocyanatzusammensetzung nach Anspruch 1 mit einem Isocyanatgehalt von 2 bis 12 Gewichtsprozent.

3. Isocyanatzusammensetzung nach Anspruch 1, wobei das Polyisocyanat ein aromatisches Polyisocyanat ist.

4. Isocyanatzusammensetzung nach Anspruch 3, wobei das aromatische Polyisocyanat ein Toluoldiisocyanat oder ein Methylendiphenylisocyanat umfasst.

5. Isocyanatzusammensetzung nach Anspruch 4, wobei das aromatische Polyisocyanat 2,4'- und 4,4'-Methylendiphenylisocyanat in einem molaren Verhältnis von 25:75 bis 80:20 umfasst.

6. Isocyanatzusammensetzung nach Anspruch 5, wobei das Polyol b(i) von einem Initiator der Formel I abgeleitet ist.

7. Isocyanatzusammensetzung nach Anspruch 6, wobei A bei jedem Auftreten in Formel I Stickstoff ist.

8. Isocyanatzusammensetzung nach Anspruch 7, wobei die Verbindung, welche durch Formel I dargestellt wird, 3,3'-Diamino-N-methyldipropylamin, 3,3'-Diamino-N-ethyldipropylamin, 2,2'-Diamino-N-methyldiethylamin ist.

9. Isocyanatzusammensetzung nach Anspruch 6, wobei A bei jedem Auftreten in Formel I Sauerstoff ist.

10. Isocyanatzusammensetzung nach Anspruch 6, wobei ein A in Formel I Sauerstoff und das andere A Stickstoff ist.

11. Isocyanatzusammensetzung nach Anspruch 10, wobei die Verbindung, welche durch Formel I dargestellt ist, N-(2-hydroxyethyl)-N-methyl-1,3-propandiamin oder N-(2-hydroxyethyl)-N-methyl-1,2-ethandiamin ist.

12. Isocyanatzusammensetzung nach Anspruch 1, wobei die Verbindung, welche durch Formel I dargestellt wird, 3,3'-Diamino-N-methyldipropylamin oder N-methyldipropanolamin ist.

13. Isocyanatzusammensetzung nach Anspruch 1, wobei das Polyol b(i) abgeleitet ist von einem Initiator der Formel II.

14. Isocyanatzusammensetzung nach Anspruch 13, wobei das stickstoffhaltige Polyetherpolyol 1 bis 25 Gewichtsprozent der Polyolzusammensetzung bildet.

15. Urethan-modifizierte Isocyanatzusammensetzung mit einem Isocyanatgehalt von 2 bis 12 Gewichtsprozent und welche umfasst das Reaktionsprodukt von:
a) einem stöchiometrischen Überschuss eines aromatischen Polyisocyanats umfassend 2,4'- und 4,4'-Methylendiphenylisocyanat in einem molaren Verhältnis von 25:75 bis 80:20, mit
b) einer Polyolzusammensetzung, welche umfasst: (i) von 1 bis 50 Gewichtsprozent, bezogen auf das Gewicht der Gesamtpolyolzusammensetzung, ein Polyetherpolyol mit einem Molekulargewicht von 1000 bis 12000, erhalten durch Alkoxylierung von 3,3'-Diamino-N-methyldipropylamin oder N-Methyldipropanolamin; und (ii) von 99 bis 50 Gewichtsprozent einen oder mehrere Polyetherpolyole, welches/welche eine durchschnittliche nominale Hydroxylfunktionalität von 1,6 bis 8 aufweist/aufweisen; ein Molekulargewicht von 1000 bis 12000; und die Polyolzusammensetzung wenigstens 30 Gewichtsprozent Oxyethylengruppen aufweist.

16. Urethan-modifizierte Isocyanatzusammensetzung mit einem Isocyanatgehalt von 2 bis 12 Gewichtsprozent und welche umfasst das Reaktionsprodukt von:
a) einem stöchiometrischen Überschuss eines aromatischen Polyisocyanats umfassend Toluoldiisocyanat; und
b) eine Polyolzusammensetzung, welche umfasst: (i) von 1 bis 50 Gewichtsprozent, bezogen auf das Gewicht der Gesamtpolyolzusammensetzung, ein Polyetherpolyol mit einem Molekulargewicht von 1000 bis 12000 und erhalten durch Alkoxylierung von 3,3'-Diamino-N-methyldipropylamin oder N-Methyldipropanolamin wurde; und (ii) von 99 bis 50 Gewichtsprozent einen oder mehrere Polyetherpolyole, welches/welche eine durchschnittliche nominale Hydroxylfunktionalität von 1,6 bis 8 aufweist/aufweisen; ein Molekulargewicht von 1000 bis 12000; und die Polyolzusammensetzung wenigstens 30 Gewichtsprozent Oxyethylengruppen aufweist.

17. Hydrophiles Polyurethanpolymer hergestellt durch Zusammenbringen von Wasser und einer Isocyanatzusammensetzung nach Anspruch 1.

18. Verfahren zur Herstellung eines hydrophilen Polyurethanschaums umfassend Zusammenmischen einer wässrigen Phase mit einer Isocyanatzusammensetzung nach Anspruch 1.

19. Verfahren zur Herstellung eines hydrophilen Polyurethangels umfassend Zusammenmischen einer wässrigen Phase mit einer lsocyanatzusammensetzung nach Anspruch 1.

20. Wachstumsmedium zum Gartenbau, umfassend eine Urethan-modifizierte Isocyanatzusammensetzung nach Anspruch 1 und wenigstens ein Füllmittel erhalten durch Mischen des Füllmittels mit der Isocyanatzusammensetzung und Zugeben von Wasser zum sich ergebenden Gemisch zur Bildung eines Wachstumsmediums.

21. Verwendung der Zusammensetzung nach Anspruch 1 als Dichtungsmittel für das Baugewerbe und die Bauindustrie.

## Revendications

1. Composition d'isocyanate à modification uréthane, qui contient moins d'environ 15 % en poids d'isocyanate et qui comprend le produit de réaction :
a) d'un polyisocyanate aliphatique ou aromatique, ou d'un mélange de tels polyisocyanates, présent en excès stoechiométrique ;
b) et d'une composition de polyols qui comprend :
i) 0,5 à 50 % en poids ou plus d'au moins un polyéther-polyol azoté dont la masse molaire vaut de 1000 à 12000 et que l'on a obtenu par alcoxylation d'au moins un amorceur de formule :
HₘA-(CH₂)ₙ-N(R)-(CH₂)p-AHₘ Formule (I)
dans laquelle
- les indices n et p sont des nombres entiers qui valent indépendamment de 2 à 6,
- A représente, indépendamment en chaque occurence, un atome d'oxygène, d'azote, de soufre ou d'hydrogène, sous réserve qu'il n'y ait à la fois qu'un seul des symboles A qui représente un atome d'hydrogène,
- R représente un groupe alkyle en CI-3,
- et l'indice m vaut 0 si A représente un atome d'hydrogène, 1 si A représente un atome d'oxygène ou de soufre, et 2 si A représente un atome d'azote ;
ou de formule
H₂N-(CH₂)ₘ-N(R)H Formule (II)
dans laquelle
- l'indice m est un nombre entier qui vaut de 2 à 12,
- et R représente un groupe alkyle en C₁₋₃,
ii) de laquelle composition de polyols le reste est un polyol additionnel dont le nombre nominal de groupes fonctionnels hydroxyle vaut de 1,6 à 8 et dont la masse molaire vaut de 1000 à 12000, et laquelle composition de polyols contient plus de 25 % en poids de motifs oxyéthylène.

2. Composition d'isocyanate conforme à la revendication 1, qui contient de 2 à 12 % en poids d'isocyanate.

3. Composition d'isocyanate conforme à la revendication 1, pour laquelle le polyisocyanate est un polyisocyanate aromatique.

4. Composition d'isocyanate conforme à la revendication 3, pour laquelle le polyisocyanate aromatique comprend un diisocyanate de toluène ou un diisocyanate de diphénylméthane.

5. Composition d'isocyanate conforme à la revendication 4, pour laquelle le polyisocyanate aromatique comprend les isomères 2,4' et 4,4' du diisocyanate de diphénylméthane, en un rapport molaire de 25/75 à 80/20.

6. Composition d'isocyanate conforme à la revendication 5, pour laquelle le polyol (b-i) dérive d'un amorceur de formule I.

7. Composition d'isocyanate conforme à la revendication 6, pour laquelle, dans la formule (I), le symbole A représente en chaque occurrence un atome d'azote.

8. Composition d'isocyanate conforme à la revendication 7, pour laquelle le composé représenté par la formule (I) est de la 3,3'-diamino-N-méthyl-dipropylamine, de la 3,3'-diamino-N-éthyl-dipropylamine ou de la 2,2'-diamino-N-méthyl-diéthylamine.

9. Composition d'isocyanate conforme à la revendication 6, pour laquelle, dans la formule (I), le symbole A représente en chaque occurrence un atome d'oxygène.

10. Composition d'isocyanate conforme à la revendication 6, pour laquelle, dans la formule (I), l'un des symboles A représente un atome d'azote et l'autre symbole A représente un atome d'oxygène.

11. Composition d'isocyanate conforme à la revendication 10, pour laquelle le composé représenté par la formule (I) est de la N-(2-hydroxyéthyl)-N-méthyl-1,3-propanediamine ou de la N-(2-hydroxyéthyl)-N-méthyl-1,2-éthanediamine.

12. Composition d'isocyanate conforme à la revendication 1, pour laquelle le composé représenté par la formule (I) est de la 3,3'-diamino-N-méthyl-dipropylamine ou de la N-méthyl-dipropanolamine.

13. Composition d'isocyanate conforme à la revendication 1, pour laquelle le polyol (b-i) dérive d'un amorceur de formule II.

14. Composition d'isocyanate conforme à la revendication 13, pour laquelle le polyéther-polyol azoté représente 1 à 25 % du poids de la composition de polyols.

15. Composition d'isocyanate à modification uréthane, qui contient de 2 à 12 % en poids d'isocyanate et qui comprend le produit de réaction :
a) d'un polyisocyanate aromatique, comprenant les isomères 2,4' et 4,4' du diisocyanate de diphénylméthane, en un rapport molaire de 25/75 à 80/20, présent en excès stoechiométrique ;
b) et d'une composition de polyols qui comprend :
i) 1 à 50 % en poids, par rapport au poids total de la composition de polyols, d'au moins un polyéther-polyol dont la masse molaire vaut de 1000 à 12000 et que l'on a obtenu par alcoxylation de 3,3'-diamino-N-méthyl-dipropylamine ou de N-méthyl-dipropanolamine,
ii) et de 99 à 50 % en poids d'un ou plusieurs polyéther-polyols dont le nombre nominal moyen de groupes fonctionnels hydroxyle vaut de 1,6 à 8 et dont la masse molaire vaut de 1000 à 12000, laquelle composition de polyols contient au moins 30 % en poids de motifs oxyéthylène.

16. Composition d'isocyanate à modification uréthane, qui contient de 2 à 12 % en poids d'isocyanate et qui comprend le produit de réaction :
a) d'un polyisocyanate aromatique, comprenant du diisocyanate de toluène, présent en excès stoechiométrique ;
b) et d'une composition de polyols qui comprend :
i) 1 à 50 % en poids, par rapport au poids total de la composition de polyols, d'au moins un polyéther-polyol dont la masse molaire vaut de 1000 à 12000 et que l'on a obtenu par alcoxylation de 3,3'-diamino-N-méthyl-dipropylamine ou de N-méthyl-dipropanolamine,
iii) et de 99 à 50 % en poids d'un ou plusieurs polyéther-polyols dont le nombre nominal moyen de groupes fonctionnels hydroxyle vaut de 1,6 à 8 et dont la masse molaire vaut de 1000 à 12000, laquelle composition de polyols contient au moins 30 % en poids de motifs oxyéthylène.

17. Polymère hydrophile de type polyuréthane, que l'on a préparé en mettant ensemble de l'eau et une composition d'isocyanate conforme à la revendication 1.

18. Procédé de fabrication d'une mousse hydrophile de polyuréthane, qui comporte le fait de mélanger l'une avec l'autre une phase aqueuse et une composition d'isocyanate conforme à la revendication 1.

19. Procédé de fabrication d'un gel hydrophile de polyuréthane, qui comporte le fait de mélanger l'une avec l'autre une phase aqueuse et une composition d'isocyanate conforme à la revendication 1.

20. Milieu de croissance pour horticulture, comprenant une composition d'isocyanate à modification uréthane, conforme à la revendication 1, et au moins un matériau servant de charge, et qu'on a obtenu en mélangeant une charge avec la composition d'isocyanate et en ajoutant de l'eau au mélange résultant, pour en faire un milieu de croissance.

21. Emploi d'une composition conforme à la revendication 1 en tant que matériau d'étanchéité dans l'industrie du bâtiment et de la construction.
